(19) Europäisches Patentamt / European Patent Office / Office européen des brevets

(11) **EP 4 715 506 A1**

(12) **EUROPÄISCHE PATENTANMELDUNG**

(43) Veröffentlichungstag:
**25.03.2026   Patentblatt 2026/13**

(21) Anmeldenummer: **24201312.6**

(22) Anmeldetag: **19.09.2024**

(51) Internationale Patentklassifikation (IPC):
*G05B 23/02* *(2006.01)*

(52) Gemeinsame Patentklassifikation (CPC):
**G05B 23/0283; G05B 23/0254;** G05B 2219/2628;
G05B 2219/33034; G05B 2219/33038

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft
80333 München (DE)**

(72) Erfinder:
• **Blumauer-Hießl, Thomas
 1050 Wien (AT)**
• **Hauser, Alexander
 4209 Engerwitzdorf (AT)**
• **Schall, Daniel
 2020 Hollabrunn (AT)**

(74) Vertreter: **Siemens Patent Attorneys
Postfach 22 16 34
80506 München (DE)**

(54) **VERFAHREN UND VORRICHTUNG ZUM BETRIEB EINER ANGETRIEBENEN TÜR**

(57)    Verfahren zum Betrieb einer angetriebenen Tür (D1-D3) durch einen Klienten (C1) eines Klienten-Server-Systems (SYS), und ein Sensor (VS1-VS3) dazu eingerichtet ist Bewegungs- und/oder Vibrationsdaten während dem Betrieb der jeweiligen Tür (D1-D3) zu erfassen, und folgende Schritte ausgeführt werden:

a) Bereitstellen eines globalen Fehler-Modells (GFM) für Betriebs-Fehler der jeweiligen Tür (D1-D3),

b) Bereitstellen eines globalen Zustands-Modells (GZM) für den Betriebs-Zustand der jeweiligen Tür (D1-D3),

c) Bereitstellen des globalen Fehler-Modells (GFM) und des globalen Zustands-Modells (GZM) an die Klienten (C1-C3),

d) Bereitstellen von einem Fehler-Kriterium für die Bestimmung von Fehlern aus Vibrationen beim Betrieb der Tür (D1-D3),

e) Bereitstellen von einem Zustands-Kriterium für die Bestimmung eines Zustands aus Vibrationen beim Betrieb der Tür (D1-D3),

f) Erfassen von Sensor-Daten von Vibrationen beim Betrieb der Tür (D1-D3),

g) Erzeugen und Trainieren eines lokalen Fehler-Modells (LFM1-LFM3) mit Sensor-Daten unter Anwendung des Fehler-Kriteriums, und Bereitstellen eines Kosten-Kriteriums für die Bewertung der Komplexität bei der Behebung von Fehlern, welche aufgrund des Fehler-Kriteriums erfasst wurden,

h) Erzeugen und Trainieren eines lokalen Zustands-Modells (LZM1-LZM3) mit Sensor-Daten unter Anwendung des Zustands-Kriteriums,

i) Bereitstellen des lokalen Fehler-Modells (LFM1-LFM3) und des lokalen Zustands-Modells (LZM1-LZM3) an den Server (S),

j) Aggregieren der lokalen Fehler-Modelle (LFM1-LFM3) und der lokalen Zustands-Modelle (LZM1-LZM3),

k) Bereitstellen des aktualisierten globalen Fehler-Modells (GFM) an den Klienten (C1),

l) Bereitstellen des aktualisierten globalen Zustands-Modells (GZM) und Aktualisieren des lokalen Zustands-Modells (LZM1) des Klienten (C1),

m) Erfassen von Sensor-Daten von Vibrationen beim Betrieb der Tür (D1),

n) Ermitteln des Gesundheitszustands der Tür (D1) mithilfe der Sensor-Daten unter Anwendung des aktualisierten lokalen Zustands-Modells (LZM1) und des aktualisierten lokalen Fehler-Modells (LFM1).

FIG 1

**Beschreibung**

Die Erfindung betrifft ein Verfahren und eine Vorrichtung zum Betrieb einer angetriebenen Tür.

Unter einer angetriebenen Tür wird im vorliegenden Zusammenhang eine Tür verstanden, die beispielsweise durch ein Steuersignal betätigt wird und automatisch öffnet oder schließt, beispielsweise durch eine elektrische oder hydraulische Öffnungs- oder Schließ-Vorrichtung. wie eine automatische Schiebetür.

In mechanischen Anlagen gibt es zahlreiche mechanische Teile, die regelmäßig gewartet werden müssen, um sie in funktionsfähigem Zustand zu halten.

Insbesondere automatische Türen oder Tore, wie Schiebetüren, Drehtüren oder konventionelle Türen mit einem oder mehreren Türblättern, die selbsttätig öffnen oder schließen, kommt es bei einer hohen Benützungsfrequenz häufig zu einem sehr hohen Wartungsaufwand.

Es gibt verschiedene Arten von Ausfällen, die während der Lebensdauer einer automatische, Tür auftreten können. Insbesondere Teile, die einem hohen Verschleiß ausgesetzt sind, wie beispielsweise Lager, Riemen, Dichtungen, etc., können zusätzliche Wartungsarbeiten erfordern, wobei es in der Praxis keine allgemeingültige Regel gibt, wie oft ein mechanisches Teil ausgetauscht oder gewartet werden muss.

Jedoch kann die Benützungsfrequenz, je nach Verwendung, sehr unterschiedlich sein, sowie je nach Anlage und Tür-Typ kann ein Ausfall unterschiedliche Ursachen haben.

So kann eine Tür zu langsam oder gar nicht öffnen beziehungsweise schließen.

Dabei kann ein sich verändernder mechanischer Widerstand bei der Bewegung der Tür oder dessen Antrieb vorliegen, sowie eine Blockierung der Tür oder ein Gebrechen im Antriebsystem der Tür auftreten.

Ursachen dafür können beispielsweise Verschmutzung, eine Behinderung im Bewegungspfad der Tür oder auch durch Alterung diverser Komponenten im Antriebs-Strang sein.

Heutzutage werden Wartungsarbeiten durchgeführt, ohne den Zustand des Tores zu überwachen, wobei die Strategie bei der Planung von Serviceeinsätzen korrigierend oder präventiv sein kann:
Eine korrigierende (reaktive) Wartung liegt vor, wenn ein Servicevorgang durchgeführt, erst wenn ein Fehler auftritt und die Tür defekt ist, und eine Inspektion der Tür durchgeführt wird, wobei die zur Reparatur notwendigen Teile oft erst bestellt werden müssen, was zu Stillstands-Zeiten oder einem erhöhten Lageraufwand führen kann.

Zusätzlich kann eine Bereitschaft für das Service-Personal benötigt werden, um die StillstandsZeit zu minimieren, falls die Tür an einer hoch-frequentierten Lage in Betrieb ist, was zu unerwünscht hohen Kosten führen kann.

Eine vorbeugende (präventive) Wartung liegt vor, wenn der Betreiber der Tür die Bedeutung der Tür einschätzen muss und vorbeugend eine Wartung durchführt, um einen Ausfall der Tür zu vermeiden, was oft durch kürzere Serviceintervalle erreicht wird, jedoch oft zu hohen Kosten führt und den tatsächlichen Verschleiß der Teile nicht berücksichtigt.

Daher ist der "Gesundheitszustand" oder der Zustand einer Tür eine äußerst nützliche Information für den Facility Manager, um einen besseren Überblick über anstehende Wartungsarbeiten zu haben und Serviceaktivitäten zu planen.

In Stand der Technik gibt es bereits Ansätze für Züge und Aufzüge, um Daten zur Vorhersage von Wartungsvorgängen zu nutzen.

Aufzüge verwenden Magnetometer-Daten von einem Magnetfeldsensor, um die Schließzeit einer Aufzugstür abzuschätzen. Zusätzlich wird die Anzahl der Öffnungen und Schließungen verfolgt.

Mit diesen beiden Informationsquellen, nämlich Schließzeit und Anzahl der Öffnungen/Schließungen, soll ein auffälliges Türverhalten erkannt werden, und die vorhergesagte Zeit bis zum Ausfall wird dabei über eine logistische Regression bewertet.

Der intelligente Sensor im Aufzug erfasst mithilfe von Magnetfeld-Daten die Anzahl der Türöffnungen und bewertet die Zeit, die zum Schließen der Tür benötigt wird.

Es erfolgt eine Übertragung der Informationen an die Cloud, wo mithilfe von Data Mining und maschinellem Lernen, sowie eine Protokollierung der Wartungshistorie eine Dokumentation der Wartungsstrategie ermittelt wird.

Dabei wird eine nicht-intrusive Sensorik angewandt, die für eine Nachrüstung von Türen geeignet ist und eine einfache Installation für verschiedene Arten von Aufzügen erlaubt, jedoch eine externe Stromversorgung benötigt.

Bei Türen von Zügen ist ein komplexes Türzustands-Überwachungssystem mithilfe von induktiv gekoppelter Telemetrie bekannt, das kontinuierliche Daten zur Türleistung liefert, und dabei historische Trends auswertet und ein detailliertes Profil des Türverhaltens erstellt, einschließlich Geschwindigkeitskurven in jeder Phase eines Öffnungs- oder Schließvorgangs.

Es ist daher Aufgabe der Erfindung eine einfache Lösung zur verbesserten Bestimmung für die Wartung von Türen und Toren bereitzustellen, welche den tatsächlichen Verschleiß der relevanten Komponenten berücksichtigt, sowie den aktuellen Zustand der Türen und Toren bereitstellt.

Die erfindungsgemäße Aufgabe wird gelöst durch ein Verfahren zum Betrieb einer angetriebenen Tür durch einen Klienten eines Klienten-Server-Systems, wobei das Klienten-Server-Systems mehrere Klienten mit jeweils einer Steuer-Vorrichtung und jeweils einem Sensor umfasst, wobei die jeweilige Steuer-Vorrichtung dazu eingerichtet ist, eine jeweilige Tür anzusteuern und anzutreiben, und wobei der jeweilige Sensor dazu eingerichtet ist Bewegungs- und/oder Vibrationsdaten während dem Betrieb der jeweiligen Tür zu erfassen, und folgende Schritte ausgeführt werden:

a) Bereitstellen eines globalen Fehler-Modells auf Basis künstlicher Intelligenz für Betriebs-Fehler der jeweiligen Tür, an den Server,

b) Bereitstellen eines globalen Zustands-Modells auf Basis künstlicher Intelligenz für den Betriebs-Zustand der jeweiligen Tür, an den Server,

c) Bereitstellen des globalen Fehler-Modells und des globalen Zustands-Modells, vom Server an die Klienten,

d) Bereitstellen von zumindest einem Fehler-Kriterium für die Bestimmung von Fehlern aus Vibrationen beim Betrieb der Tür, an die Klienten,

e) Bereitstellen von zumindest einem Zustands-Kriterium für die Bestimmung eines Zustands aus Vibrationen beim Betrieb der Tür, an die Klienten,

f) Erfassen von jeweiligen Sensor-Daten von Vibrationen beim Betrieb der jeweiligen Tür, durch den jeweiligen Klienten,

g) Erzeugen und Trainieren eines jeweiligen lokalen Fehler-Modells mit jeweiligen Sensor-Daten unter Anwendung des zumindest einen Fehler-Kriteriums, durch den jeweiligen Klienten, und Bereitstellen von zumindest einem Kosten-Kriterium für die Bewertung der Komplexität bei der Behebung von Fehlern, welche aufgrund des zumindest einen Fehler-Kriteriums erfasst wurden,

h) Erzeugen und Trainieren eines jeweiligen lokalen Zustands-Modells mit jeweiligen Sensor-Daten unter Anwendung des zumindest einen Zustands-Kriteriums, durch den jeweiligen Klienten,

i) Bereitstellen des jeweiligen lokalen Fehler-Modells und des jeweiligen lokalen Zustands-Modells und des zumindest einen Kosten-Kriteriums an den Server, durch den jeweiligen Klienten,

j) Aggregieren der jeweiligen lokalen Fehler-Modelle unter Berücksichtigung des zumindest einen Kosten-Kriteriums und dementsprechendes Aktualisieren des globalen Fehler-Modells, und Aggregieren der jeweiligen lokalen Zustands-Modelle unter Berücksichtigung des zumindest einen Kosten-Kriteriums und Aktualisieren des globalen Zustands-Modells, durch den Server,

k) Bereitstellen des aktualisierten globalen Fehler-Modells vom Server an den Klienten, und Aktualisieren des lokalen Fehler-Modells des Klienten mithilfe des aktualisierten globalen Fehler-Modells durch den Klienten,

l) Bereitstellen des aktualisierten globalen Zustands-Modells vom Server an den Klienten, und Aktualisieren des lokalen Zustands-Modells des Klienten mithilfe des aktualisierten globalen Zustands-Modells durch den Klienten,

m) Erfassen von Sensor-Daten von Vibrationen beim Betrieb der Tür, durch den Klienten,

n) Ermitteln des Gesundheitszustands der Tür mithilfe der Sensor-Daten unter Anwendung des aktualisierten lokalen Zustands-Modells und des aktualisierten lokalen Fehler-Modells, durch den Klienten.

Durch die Verwendung eines föderierten Lernansatzes können verschiedene Standorte voneinander profitieren, indem das Modell miteinander geteilt wird. Dieses Modell kann verwendet werden, um verschiedene Fehlerarten zu klassifizieren.

Dadurch können einerseits diese festen Serviceintervalle verlängert und andererseits die Anzahl der Ad-hoc-Einsätze durch einen Servicetechniker reduziert werden.

Das FL-Klassifikator-Modell (engl. "federated learning classifier model") wird erstellt, indem das globale Klassifikator-Modell aus jeweiligen lokalen Modellen von den einzelnen Klienten zusammengeführt wird.

Der Beitrag der einzelnen Klienten kann dabei nach den "Kosten" der Fehler gewichtet werden, die zum Trainieren dieses lokalen Modells auf dem Client verwendet wurden.

Je höher die Kosten waren, desto wichtiger waren die Ausfälle und desto wichtiger ist der Beitrag zum globalen Modell.

Unter den Kosten $cost_{c,i}$ werden die Kosten oder Aufwände von einzelnen Instandhaltungsmaßnahmen, wie Umfang und Dauer einer Wartung, Ersatzteilkosten und Ersatz-Kosten für Stillstands-Zeiten der Tür, bei welcher die Tür nicht benutzt werden kann, wie die Bereitstellung einer Alternative für die Tür verstanden, welche durch die zuvor genannten Wartungsinformationen näher beschrieben werden können, wobei der Index i (engl. "incident") fortlaufend auftretende Fehler am jeweiligen Klienten c aufsteigend durchnummeriert.

Die lokale Gewichtungsfunktion $w_c$ für einen Klient kann über die in der Vergangenheit verursachten Kostenerhaltungsmaßnahmen definiert werden, also darüber, wie "wichtig" die Vorfälle oder Fehler waren.

$$w_c = \frac{\sum_{i \in incidents} cost_{c,i}}{\sum_{c \in clients} \left( \sum_{i \in incidents} cost_{c,i} \right)}$$

Der Server und die Klienten weisen entsprechende Prozessoren und Speicher auf.

Die Summe der lokalen Kosten $\sum_{i \in incidents} cost_{c,i}$ wird dem Server bereitgestellt.

Durch das Verfahren wird eine System-Architektur unterstützt, welche eine hohe Flexibilität und Modularität bei der Installation des Systems erlaubt.

Die einsetzbaren Sensoren können Batterie- oder Akku-betrieben sein, was sie unabhängig von einer Stromquelle macht und wodurch die Installation sehr einfach ist und beispielsweise, im Gegensatz zu bestehenden Ansätzen, kein Elektriker benötigt wird.

Ferner können die Daten beispielsweise nur täglich an die Cloud gesendet werden, wodurch die Akkulaufzeit verlängert wird.

Das Anwendungs-Programm für maschinelles Lernen kann sowohl am Server, also in der Cloud, als auch am Klienten, wie einem Edge-Gerät ausgeführt werden

Die Schnittstelle des Programms für die berechneten Bedingungen, beispielsweise für die Anwendung für maschinelles Lernen, kann es Software von Drittanbietern erleichtern, Daten zu sammeln und in eine entsprechende Visualisierung zu integrieren

Die Bedingungen werden in das sogenannte "ROME"-Anwendungsprogramm für einen Gebäudeverwalter integriert, eine BIM (engl, "building information modeling") -Software, die speziell für Gebäudeverwalter (engl. "facility manager") entwickelt wurde.

So hat der Gebäudeverwalter den Gesundheitszustand der überwachten Türen (Ist-Zustand + Vergangenheitsstatus) übersichtlich in seinem Alltagstool. Integrationen zu Produkten wie "Ecodomus" sind ebenfalls möglich.

Durch den föderierten Ansatz können neu eingebaute Türen auf einfache Weise das Wissen über bereits in der Vergangenheit betriebene, andere Türen nutzen.

Das Gewicht der einzelnen Modelle kann von den Kosten der aufgetretenen Ausfälle abhängen, weshalb das föderierte globale Modell stärker von schwerwiegenderen Fehlern beeinflusst werden kann, und "teurere" Fehler im globalen Modell stärker priorisiert werden können.

Eine weitere nützliche Information ist die Art des aufgetretenen Fehlers und wie hoch die Kosten für die Wartung sind.

Ein Fehler-Modell auf Basis künstlicher Intelligenz für Betriebs-Fehler der jeweiligen Tür beschreibt mögliche Fehler-Zustände der Tür, wie ein verändernder mechanischer Widerstand bei der Bewegung der Tür oder dessen Antrieb, eine Blockierung der Tür oder ein Gebrechen im Antriebsystem der Tür.

Ursachen dafür können beispielsweise Verschmutzung, eine Behinderung im Bewegungspfad der Tür oder auch durch Alterung diverser Komponenten im Antriebs-Strang sein.

Ein Zustands-Modell auf Basis künstlicher Intelligenz für den Betriebs-Zustand der jeweiligen Tür beschreibt mögliche Betriebs-Zustände der Tür, wie ein Indikator für den Verschleiß beispielsweise von Lager, Riemen, Dichtungen, etc.

Ein Fehler-Kriterium für die Bestimmung von Fehlern aus Vibrationen beim Betrieb der Tür dient dazu, einen Fehler mithilfe eines entsprechenden Indikators zu bestimmen und zu kennzeichnen.

Ein Zustands-Kriterium für die Bestimmung eines Zustands aus Vibrationen beim Betrieb der Tür dient dazu, einen zulässigen oder auch nicht-zulässigen Betriebszustand mithilfe eines entsprechenden Indikators zu bestimmen und zu kennzeichnen.

Das jeweilige lokale Zustands-Modell kann bevorzugt auf Basis des globalen Zustands-Modells durch den jeweiligen Klienten erzeugt werden, besonders bevorzugt im Schritt h).

Der Gesundheitszustand der Tür kann durch eine gemeinsame Berücksichtigung des aktualisierten lokalen Zustands-Modells und des aktualisierten lokalen Fehler-Modells erfolgen, beispielsweise, indem der aktuelle "Ist"-Zustand und der Status der Tür in der Vergangenheit ausgewertet werden, und ein zukünftiger Status durch die Verwendung der beiden genannten Modelle prognostiziert werden kann.

Zumindest ein Teil des Verfahrens kann in einem Computer implementiert sein.

In einer Weiterbildung der Erfindung ist es vorgesehen, dass der Betrieb der Tür eine Bewegung und/oder einen Stillstand nach der Bewegung der Tür durch Sensor-Daten des Sensors abbildet, welche durch eine Betätigung der Tür ausgelöst wird.

Dadurch wird erreicht, dass der tatsächliche Betrieb der Tür durch einen oder mehrere entsprechende Sensoren erfasst wird und mithilfe der derart aufgenommene Sensordaten entsprechende Modelle auf Basis künstlicher Intelligenz erzeugt, trainiert und angewendet werden können.

In einer Weiterbildung der Erfindung ist es vorgesehen, dass das zumindest eine Fehler-Kriterium und/oder das zumindest eine Zustands-Kriterium jeweils durch einen vorgegebenen Wertebereich für die jeweiligen Sensor-Daten festgelegt ist.

Dadurch wird erreicht, dass auf einfache Weise Fehler oder Betriebszustände der Tür erfasst und bestimmt werden können.

In einer Weiterbildung der Erfindung ist es vorgesehen, dass das zumindest eine Fehler-Kriterium für die Bestimmung von Fehlern aus Vibrationen beim Betrieb der Tür durch eine, im Fehler-Modell entsprechende Berücksichtigung der Komplexität bei der Wartung und/oder der Ausfallzeit bei der Wartung oder Reparatur der Tür, oder davon abgeleiteten Komponenten der Tür, gebildet ist.

Dadurch wird erreicht, dass die Auswirkung von Betriebs-Fehlern, also die Auswirkungen eines Ausfalls beim regulären Betrieb der Tür, während dem Betrieb der Tür im entsprechenden Modell berücksichtigt werden können, und so einem Ausfall besser vorgebeugt werden kann.

In einer Weiterbildung der Erfindung ist es vorgesehen, dass das zumindest eine Zustands-Kriterium für die Bestimmung des Zustands aus Vibrationen beim Betrieb der Tür durch eine, im Zustands-Modell entsprechende Berücksichtigung des zeitlichen Verschleißes der Tür, oder davon abgeleiteten Komponenten der Tür, gebildet ist.

Dadurch wird erreicht, dass beispielsweise Betriebs-Einflüsse, -Auswirkungen oder auch Verschleiß der Tür im entsprechenden Modell berücksichtigt werden können.

Die erfindungsgemäße Aufgabe wird auch durch ein Klienten-Server-System zum Betrieb einer angetriebenen Tür durch einen Klienten des Klienten-Server-Systems gelöst, wobei das Klienten-Server-Systems mehrere Klienten mit jeweils einer Steuer-Vorrichtung und jeweils einem Sensor umfasst, wobei die jeweilige Steuer-Vorrichtung dazu eingerichtet ist, eine jeweilige Tür anzusteuern und anzutreiben, und wobei der jeweilige Sensor dazu eingerichtet ist Bewegungs- und/oder Vibrationsdaten während dem Betrieb der jeweiligen Tür zu erfassen, und das Klienten-Server-System ferner dazu eingerichtet ist, das erfindungsgemäße Verfahren auszuführen.

In den nachfolgenden Zeichnungen wird die Erfindung anhand eines Ausführungsbeispiels näher beschrieben. In den Figuren zeigt

Fig. 1 ein Ausführungsbeispiel für ein Klienten-Server-System zum Betrieb einer angetriebenen Tür,

Fig. 2 ein Ausführungsbeispiel für das erfindungsgemäße Verfahren als Ablaufdiagramm,

Fig. 3 ein weiteres Ausführungsbeispiel für ein Klienten-Server-System zum Betrieb einer angetriebenen Tür,

Fig. 4 ein weiteres Ausführungsbeispiel für das erfindungsgemäße Klienten-Server-System,

Fig. 5 ein Ausführungsbeispiel für einen Klienten-seitigen Algorithmus, zur Auswahl eines Klienten-Modells in Form eines Pseudocodes,

Fig. 6 ein Ausführungsbeispiel für einen Server-seitigen Algorithmus zur Auswahl eines Klienten-Modells in Form eines Pseudocodes.

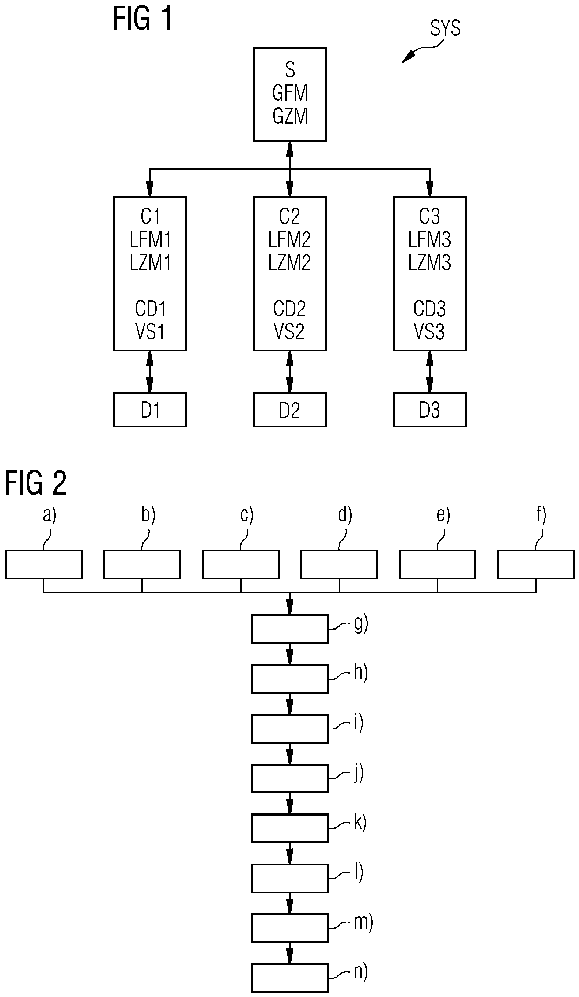

**Fig. 1** zeigt ein Ausführungsbeispiel für ein Klienten-Server-System SYS zum Betrieb einer jeweils durch einen Klienten C1-C3 des Klienten-Server-Systems SYS jeweiligen angetriebenen Tür D1-D3.

Das Klienten-Server-Systems SYS umfasst drei Klienten C1-C3 mit jeweils einer Steuer-Vorrichtung CD1-CD3 und jeweils einem Sensor VS1-VS3.

Die jeweilige Steuer-Vorrichtung CD1-CD3 ist dazu eingerichtet, die jeweilige Tür D1-D3 anzusteuern und anzutreiben.

Der jeweilige Sensor VS1-VS3 ist dazu eingerichtet, Bewegungs- und/oder Vibrationsdaten während dem Betrieb der jeweiligen Tür D1-D3 zu erfassen.

Das Klienten-Server-System SYS ist ferner dazu eingerichtet, das nachfolgend näher beschriebene, erfindungsgemäße Verfahren auszuführen.

Die Steuer-Vorrichtung kann einen Prozessor und einen Speicher aufweisen und mithilfe eines Kommunikations-Moduls die berechneten relevanten Modell-Daten erhalten und weiterverarbeiten.

Fig. 2 stellt ein Ausführungsbeispiel für das erfindungsgemäße Verfahren als Ablaufdiagramm dar.

Es liegt das System SYS nach der vorhergehenden Figur zugrunde.

Folgende Schritte werden ausgeführt:

a) Bereitstellen eines globalen Fehler-Modells GFM auf Basis künstlicher Intelligenz für Betriebs-Fehler der jeweiligen Tür D1-D3, an den Server S,

b) Bereitstellen eines globalen Zustands-Modells GZM auf Basis künstlicher Intelligenz für den Betriebs-Zustand der jeweiligen Tür D1-D3, an den Server S,

c) Bereitstellen des globalen Fehler-Modells GFM und des globalen Zustands-Modells GZM, vom Server S an die Klienten C1-C3,

d) Bereitstellen von zumindest einem Fehler-Kriterium für die Bestimmung von Fehlern aus Vibrationen beim Betrieb der Tür D, D1-D3, an die Klienten C1-C3,

e) Bereitstellen von zumindest einem Zustands-Kriterium für die Bestimmung eines Zustands aus Vibrationen beim Betrieb der Tür D, D1-D3, an die Klienten C1-C3,

f) Erfassen von jeweiligen Sensor-Daten VD von Vibrationen beim Betrieb der jeweiligen Tür D1-D3, durch den jeweiligen Klienten C1-C3,

g) Erzeugen und Trainieren eines jeweiligen lokalen Fehler-Modells LFM1-LFM3 mit jeweiligen Sensor-Daten VD unter Anwendung des zumindest einen Fehler-Kriteriums, durch den jeweiligen Klienten C1-C3, und Bereitstellen von zumindest einem Kosten-Kriterium für die Bewertung der Komplexität bei der Behebung von Fehlern, welche aufgrund des zumindest einen Fehler-Kriteriums erfasst wurden,

h) Erzeugen und Trainieren eines jeweiligen lokalen Zustands-Modells LZM1-LZM3 mit jeweiligen Sensor-Daten VD unter Anwendung des zumindest einen Zustands-Kriteriums, durch den jeweiligen Klienten C1-C3,

i) Bereitstellen des jeweiligen lokalen Fehler-Modells LFM1-LFM3 und des jeweiligen lokalen Zustands-Modells LZM1-LZM3 und des zumindest einen Kosten-Kriteriums an den Server S, durch den jeweiligen Klienten C1-C3,

j) Aggregieren der jeweiligen lokalen Fehler-Modelle LFM1-LFM3 unter Berücksichtigung des zumindest einen Kosten-Kriteriums und dementsprechendes Aktualisieren des globalen Fehler-Modells GFM, und Aggregieren der jeweiligen lokalen Zustands-Modelle LZM1-LZM3 unter Berücksichtigung des zumindest einen Kosten-Kriteriums und Aktualisieren des globalen Zustands-Modells GZM, durch den Server S,

k) Bereitstellen des aktualisierten globalen Fehler-Modells GFM vom Server S an den Klienten C1, und Aktualisieren des lokalen Fehler-Modells LFM1 des Klienten C1 mithilfe des aktualisierten globalen Fehler-Modells GFM durch den Klienten C1,

l) Bereitstellen des aktualisierten globalen Zustands-Modells GZM vom Server S an den Klienten C1, und Aktualisieren des lokalen Zustands-Modells LZM1 des Klienten C1 mithilfe des aktualisierten globalen Zustands-Modells GZM durch den Klienten C1,

m) Erfassen von Sensor-Daten VD von Vibrationen beim Betrieb der Tür D1, durch den Klienten C1,

n) Ermitteln des Gesundheitszustands der Tür D1 mithilfe der Sensor-Daten unter Anwendung des aktualisierten lokalen Zustands-Modells LZM1 und des aktualisierten lokalen Fehler-Modells LFM1, durch den Klienten C1.

Der Betrieb der Tür wird durch eine Bewegung und/oder einen Stillstand nach der Bewegung der Tür D, D1-D3 durch Sensor-Daten VD des Sensors VS, VS1-VS3 abgebildet, welche durch eine Betätigung der Tür ausgelöst wird.

Das zumindest eine Fehler-Kriterium und/oder das zumindest eine Zustands-Kriterium kann jeweils durch einen vorgegebenen Wertebereich für die jeweiligen Sensor-Daten VD festgelegt sein.

Das zumindest eine Fehler-Kriterium für die Bestimmung von Fehlern aus Vibrationen beim Betrieb der Tür D, D1-D3 kann durch eine, im Fehler-Modell entsprechende Berücksichtigung der Komplexität bei der Wartung und/oder der Ausfallzeit bei der Wartung oder Reparatur der Tür, oder davon abgeleiteten Komponenten der Tür, gebildet sein.

Das zumindest eine Zustands-Kriterium für die Bestimmung des Zustands aus Vibrationen beim Betrieb der Tür D, D1-D3 kann durch eine, im Zustands-Modell entsprechende Berücksichtigung des zeitlichen Verschleißes der Tür, oder davon abgeleiteten Komponenten der Tür, gebildet sein.

Das jeweilige lokale Zustands-Modell LZM1-LZM3 wird im Schritt h) auf Basis des globalen Zustands-Modells GZM durch den jeweiligen Klienten C1-C3 erzeugt.

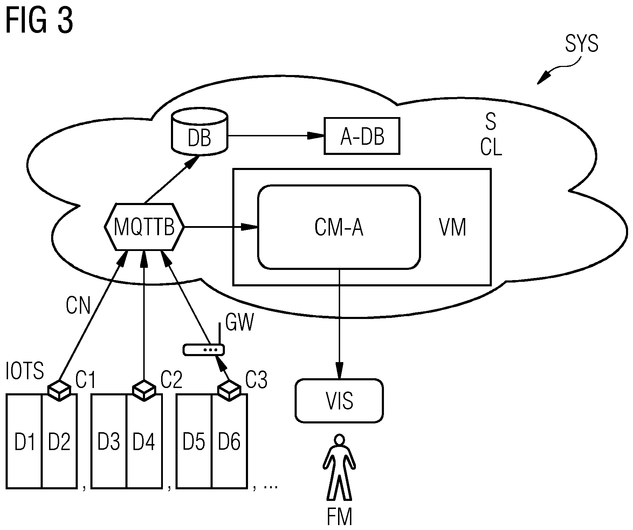

Fig. 3 stellt ein weiteres Ausführungsbeispiel für das Klienten-Server-System SYS zum Betrieb von angetriebenen Türen D1-D6 durch Klienten C1-C3, welche jeweils entsprechende IoT-Sensoren IOTS aufweisen.

Der Server S ist in einer Cloud CL gelegen und über ein Funknetz CN mit den Klienten C1-C3 verbunden, falls nötig kann zusätzlich ein Gateway GW zur Herstellung einer Datenverbindung zwischen Server S und Klienten C1-C3 vorgesehen sein.

Ferner kann zusätzlich zwischen Server S und Klienten C1-C3 ein MQTT-Broker MQTTB vorgesehen sein, um den Datenverkehr im Server S auf einfache und standardisierte Weise durchzuführen.

Im Server läuft ein Anwendungsprogramm CM-A zur Betriebszustands-Überwachung auf einer virtuelle Maschine VM ab, welche die Daten verarbeitet, verwaltet und koordiniert, beispielsweise durch eine Visualisierung VIS durch einen Benutzer oder Bediener FM (engl. "facility manager").

Der Server S weist eine Datenbank DB zur Speicherung von Daten, wie von den Klienten C1-C3 bereitgestellten lokalen ML-Modelle (engl. "machine learning", kurz ML), und eine Azure-Datenbank A-DB zur Speicherung und Verarbeitung von ML-Modellen auf.

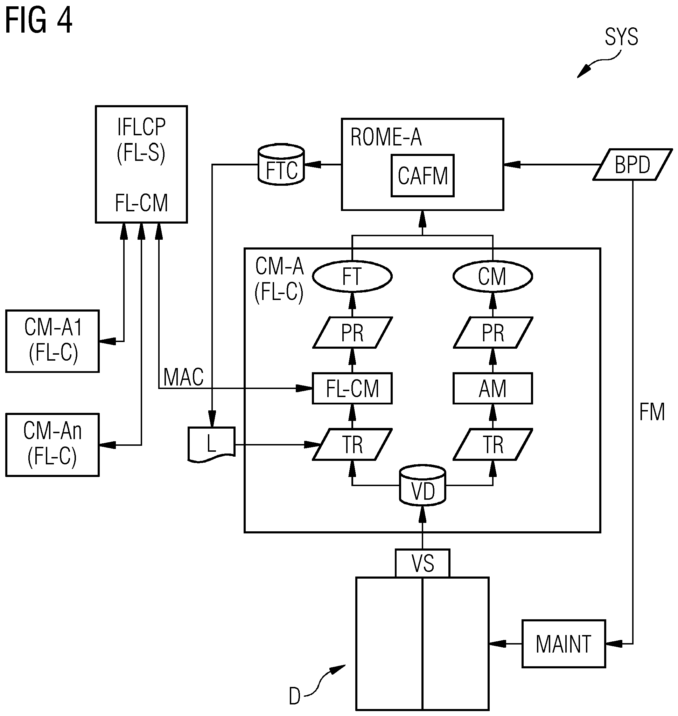

Fig. 4 stellt ein weiteres Ausführungsbeispiel für das Klienten-Server-System SYS zum Betrieb einer angetriebenen Türen D durch einen Klienten dar.

Ein Anwendungsprogramm IFL-Cockpit, kurz IFL-CP, welches auf einem Server für föderiertes Lernen FL-S, also am Server S abläuft, stellt jeweilige Verbindungen zu den Klienten zum föderierten Lernen her.

Anwendungen zur Überwachung des Betriebszustands CM-A1-CMn können auf den Klienten ebenfalls ablaufen.

Der Benutzer FM kann an den jeweiligen Klienten den Betrieb überwachen, beispielsweise durch "Browsing", also eine Überwachung ohne konkrete Fehlerzustände, eine Planung von

Services sowie eine Dokumentation von Services BPD, sowie Wartungsinformationen für eine Wartung MAINT (engl. "maintenance") der Tür erfassen und bereitstellen.

Die Tür D weist einen Vibrations-Sensor VS zur Erfassung von Vibrationen beim Betrieb der Tür D auf, wodurch Vibrations-Daten VD erzeugt werden.

An einem Klienten für föderiertes Lernen FL-C wird mithilfe der Vibrations-Daten VD durch Anwendung von Markierungen L (engl."label") ein Training TR durchgeführt und durch einen Klassifizierer für föderiertes Lernen FL-CM ein ML-Modell für ein jeweiliges lokales Fehler-Modell erzeugt.

Durch das Anwendungsprogramm IFL-Cockpit IFL-CP können Modell-Daten und Daten zu aggregierten Kosten MAC zwischen dem Server für föderiertes Lernen FL-S und dem Klassifizierer für föderiertes Lernen FL-CM ausgetauscht werden.

Mithilfe des lokalen Fehler-Modells kann dann eine Prädiktion PR durchgeführt werden, um einen Fehler eines bestimmten Fehler-Typs FT zu erkennen, welcher dann an eine ROME-Anwendung ROME-A zur Fern-Wartung der Tür D am Server S übermittelt wird, welche eine "Computer Aided Facility Management"-Anwendung CAFM implementiert.

Zusätzlich wird mithilfe der Vibrations-Daten VD durch Anwendung von

Markierungen L (engl."label") ein Training TR durchgeführt und durch Anwendung eines Anomalie-Modells AM ein jeweiliges lokales Zustands-Modell erzeugt.

Mithilfe des lokalen Zustands-Modells kann eine Prädiktion PR durchgeführt werden, um einen Betriebszustand der Tür D zu erkennen, welcher dann ebenfalls an die ROME-Anwendung ROME-A am Server S übermittelt wird.

Die ROME-Anwendung ROME-A erzeugt Daten für Fehler-Typ und Kosten FTC, welche in einer Datenbank gespeichert werden können.

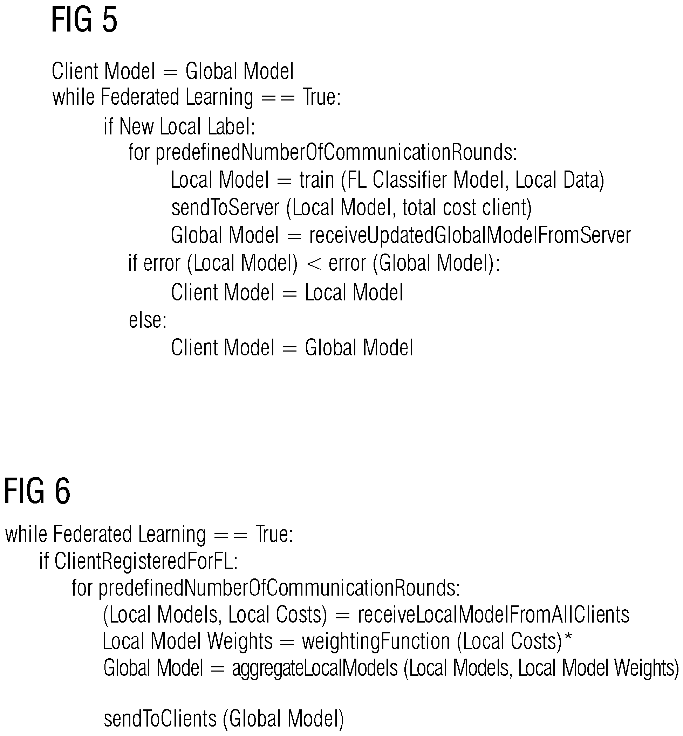

**Fig. 5** zeigt ein Ausführungsbeispiel für einen Algorithmus, der entscheidet, ob ein Klient an das global trainierte (Verbund-)Modell oder das Modell, welches nur mit den lokalen Daten eines Klienten trainiert wurde, verwendet.

**Fig. 6** zeigt ein Ausführungsbeispiel für einen Algorithmus nach der vorhergehenden Figur, welcher auf der Serverseite ausgeführt wird.

Die lokale Gewichtungsfunktion $w_c$ wird im Pseudo-Programmcode als "weightingFunction(Local Costs)" bezeichnet.

*Unabhängig vom grammatikalischen Geschlecht eines bestimmten Begriffes sind Personen mit männlicher, weiblicher oder anderer Geschlechteridentität mit umfasst.*

Bezugszeichenliste

| | |
|---|---|
| A-DB | Azure-Datenbank |
| AM | Anomalie-Modell |
| BPD | Browsing, Service Planung, Service Dokumentation |
| C1-C3 | Klient |
| CAFM | Computer Aided Facility Management |
| CD1-CD3 | Steuer-Vorrichtung |
| CL | Cloud |
| CM-A, CM-A1-CMn | Betriebszustands-Überwachungs-Anwendung |
| CN | Mobilfunknetz |
| D, D1-D6 | Tür |
| DB | Datenbank |
| FL-C | Client für föderiertes Lernen |
| FL-CM | Klassifizierer für föderiertes Lernen |
| FL-S | Server für föderiertes Lernen |
| FM | Bediener (engl. "facility manager") |
| FT | Fehler-Typ |
| FTC | Fehler-Typ und Kosten |
| GFM | globales Fehler-Modell |
| GW | Gateway |
| GZM | globales Zustands-Modell |
| IFL-CP | IFL-Cockpit |
| IOTS | IoT-Sensor |
| L | Markierung (engl."label") |
| LFM1-LFM3 | lokales Fehler-Modell |
| LZM1-LZM3 | lokales Zustands-Modell |
| MAC | Modell und aggregierte Kosten |
| MAINT | Wartung (engl. "maintenance") |
| MQTTB | MQTT-Broker |
| PR | Prädiktion |
| ROME-A | ROME-Anwendung |
| S | Server |
| SYS | Klienten-Server-System |
| TR | Trainieren |

| | |
|---|---|
| VD | Vibrations-Daten |
| VIS | Visualisierung |
| VM | virtuelle Maschine |
| VS, VS1-VS3 | Vibrations-Sensor |

**Patentansprüche**

1. Verfahren zum Betrieb einer angetriebenen Tür (D, D1-D3) durch einen Klienten (C1) eines Klienten-Server-Systems (SYS), wobei das Klienten-Server-Systems (SYS) mehrere Klienten (C1-C3) mit jeweils einer Steuer-Vorrichtung (CD1-CD3) und jeweils einem Sensor (VS, VS1-VS3) umfasst, wobei die jeweilige Steuer-Vorrichtung (CD1-CD3) dazu eingerichtet ist, eine jeweilige Tür (D, D1-D3) anzusteuern und anzutreiben, und wobei der jeweilige Sensor (VS, VS1-VS3) dazu eingerichtet ist Bewegungs- und/oder Vibrationsdaten während dem Betrieb der jeweiligen Tür (D, D1-D3) zu erfassen, und folgende Schritte ausgeführt werden:

   a) Bereitstellen eines globalen Fehler-Modells (GFM) auf Basis künstlicher Intelligenz für Betriebs-Fehler der jeweiligen Tür (D1-D3), an den Server (S),
   b) Bereitstellen eines globalen Zustands-Modells (GZM) auf Basis künstlicher Intelligenz für den Betriebs-Zustand der jeweiligen Tür (D1-D3), an den Server (S),
   c) Bereitstellen des globalen Fehler-Modells (GFM) und des globalen Zustands-Modells (GZM), vom Server (S) an die Klienten (C1-C3),
   d) Bereitstellen von zumindest einem Fehler-Kriterium für die Bestimmung von Fehlern aus Vibrationen beim Betrieb der Tür (D, D1-D3), an die Klienten (C1-C3),
   e) Bereitstellen von zumindest einem Zustands-Kriterium für die Bestimmung eines Zustands aus Vibrationen beim Betrieb der Tür (D, D1-D3), an die Klienten (C1-C3),
   f) Erfassen von jeweiligen Sensor-Daten (VD) von Vibrationen beim Betrieb der jeweiligen Tür (D1-D3), durch den jeweiligen Klienten (C1-C3),
   g) Erzeugen und Trainieren eines jeweiligen lokalen Fehler-Modells (LFM1-LFM3) mit jeweiligen Sensor-Daten (VD) unter Anwendung des zumindest einen Fehler-Kriteriums, durch den jeweiligen Klienten (C1-C3), und Bereitstellen von zumindest einem Kosten-Kriterium für die Bewertung der Komplexität bei der Behebung von Fehlern, welche aufgrund des zumindest einen Fehler-Kriteriums erfasst wurden,
   h) Erzeugen und Trainieren eines jeweiligen lokalen Zustands-Modells (LZM1-LZM3) mit jeweiligen Sensor-Daten (VD) unter Anwendung des zumindest einen Zustands-Kriteriums, durch den jeweiligen Klienten (C1-C3),
   i) Bereitstellen des jeweiligen lokalen Fehler-Modells (LFM1-LFM3) und des jeweiligen lokalen Zustands-Modells (LZM1-LZM3) und des zumindest einen Kosten-Kriteriums an den Server (S), durch den jeweiligen Klienten (C1-C3),

j) Aggregieren der jeweiligen lokalen Fehler-Modelle (LFM1-LFM3) unter Berücksichtigung des zumindest einen Kosten-Kriteriums und dementsprechendes Aktualisieren des globalen Fehler-Modells (GFM), und Aggregieren der jeweiligen lokalen Zustands-Modelle (LZM1-LZM3) unter Berücksichtigung des zumindest einen Kosten-Kriteriums und Aktualisieren des globalen Zustands-Modells (GZM), durch den Server (S),

k) Bereitstellen des aktualisierten globalen Fehler-Modells (GFM) vom Server (S) an den Klienten (C1), und Aktualisieren des lokalen Fehler-Modells (LFM1) des Klienten (C1) mithilfe des aktualisierten globalen Fehler-Modells (GFM) durch den Klienten (C1),

l) Bereitstellen des aktualisierten globalen Zustands-Modells (GZM) vom Server (S) an den Klienten (C1), und Aktualisieren des lokalen Zustands-Modells (LZM1) des Klienten (C1) mithilfe des aktualisierten globalen Zustands-Modells (GZM) durch den Klienten (C1),

m) Erfassen von Sensor-Daten (VD) von Vibrationen beim Betrieb der Tür (D1), durch den Klienten (C1),

n) Ermitteln des Gesundheitszustands der Tür (D1) mithilfe der Sensor-Daten unter Anwendung des aktualisierten lokalen Zustands-Modells (LZM1) und des aktualisierten lokalen Fehler-Modells (LFM1), durch den Klienten (C1).

2. Verfahren nach dem vorhergehenden Anspruch, wobei der Betrieb der Tür eine Bewegung und/oder einen Stillstand nach der Bewegung der Tür (D, D1-D3) durch Sensor-Daten (VD) des Sensors (VS, VS1-VS3) abbildet, welche durch eine Betätigung der Tür (D, D1-D3) ausgelöst wird.

3. Verfahren nach einem der vorhergehenden Ansprüche, wobei das zumindest eine Fehler-Kriterium und/oder das zumindest eine Zustands-Kriterium jeweils durch einen vorgegebenen Wertebereich für die jeweiligen Sensor-Daten (VD) festgelegt ist.

4. Verfahren nach einem der vorhergehenden Ansprüche, wobei das zumindest eine Fehler-Kriterium für die Bestimmung von Fehlern aus Vibrationen beim Betrieb der Tür (D, D1-D3) durch eine, im Fehler-Modell entsprechende Berücksichtigung der Komplexität bei der Wartung und/oder der Ausfallzeit bei der Wartung oder Reparatur der Tür (D, D1-D3), oder davon abgeleiteten Komponenten der Tür (D, D1-D3), gebildet ist.

5. Verfahren nach einem der vorhergehenden Ansprüche, wobei das zumindest eine Zustands-Kriterium für die Bestimmung des Zustands aus Vibrationen beim Betrieb der Tür (D, D1-D3) durch eine, im Zustands-Modell entsprechende Berücksichtigung des zeitlichen Verschleißes der Tür (D, D1-D3), oder davon abgeleiteten Komponenten der Tür (D, D1-D3), gebildet ist.

6. Verfahren nach einem der vorhergehenden Ansprüche, wobei das jeweilige lokale Zustands-Modell (LZM1-LZM3) auf Basis des globalen Zustands-Modells (GZM) durch den jeweiligen Klienten (C1-C3) erzeugt wird, vorzugsweise im Schritt h).

7. Klienten-Server-System (SYS) zum Betrieb einer angetriebenen Tür (D, D1-D3) durch einen Klienten (C1) des Klienten-Server-Systems (SYS), wobei das Klienten-Server-Systems (SYS) mehrere Klienten (C1-C3) mit jeweils einer Steuer-Vorrichtung (CD1-CD3) und jeweils einem Sensor (VS, VS1-VS3) umfasst, wobei die jeweilige Steuer-Vorrichtung (CD1-CD3) dazu eingerichtet ist, eine jeweilige Tür (D1-D3) anzusteuern und anzutreiben, und wobei der jeweilige Sensor (VS, VS1-VS3) dazu eingerichtet ist Bewegungs- und/oder Vibrationsdaten während dem Betrieb der jeweiligen Tür (D1-D3) zu erfassen, und das Klienten-Server-System (SYS) ferner dazu eingerichtet ist, das Verfahren nach einem der vorhergehenden Ansprüche auszuführen.

## FIG 1

SYS

| S GFM GZM |
|---|

| C1 LFM1 LZM1 CD1 VS1 | | C2 LFM2 LZM2 CD2 VS2 | | C3 LFM3 LZM3 CD3 VS3 |
|---|---|---|---|---|

| D1 | | D2 | | D3 |
|---|---|---|---|---|

## FIG 2

a)  b)  c)  d)  e)  f)

g)

h)

i)

j)

k)

l)

m)

n)

# FIG 3

SYS

S
CL

DB → A-DB

MQTTB → CM-A    VM

CN

GW

IOTS    C1    C2    C3

D1 | D2 ,    D3 | D4 ,    D5 | D6 , ...

VIS

FM

# FIG 4

SYS

IFLCP
(FL-S)

FL-CM

FTC

ROME-A

CAFM

BPD

CM-A1
(FL-C)

CM-An
(FL-C)

CM-A
(FL-C)

FT

CM

PR

PR

MAC

FL-CM

AM

L

TR

TR

VD

FM

VS

D

MAINT

# FIG 5

```
Client Model = Global Model
while Federated Learning == True:
        if New Local Label:
            for predefinedNumberOfCommunicationRounds:
                Local Model = train (FL Classifier Model, Local Data)
                sendToServer (Local Model, total cost client)
                Global Model = receiveUpdatedGlobalModelFromServer
            if error (Local Model) < error (Global Model):
                Client Model = Local Model
            else:
                Client Model = Global Model
```

# FIG 6

```
while Federated Learning == True:
    if ClientRegisteredForFL:
        for predefinedNumberOfCommunicationRounds:
            (Local Models, Local Costs) = receiveLocalModelFromAllClients
            Local Model Weights = weightingFunction (Local Costs)*
            Global Model = aggregateLocalModels (Local Models, Local Model Weights)

            sendToClients (Global Model)
```

Europäisches Patentamt
European Patent Office
Office européen des brevets

# EUROPÄISCHER RECHERCHENBERICHT

Nummer der Anmeldung

EP 24 20 1312

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 4 105 900 A1 (DORMAKABA DEUTSCHLAND GMBH [DE]) 21. Dezember 2022 (2022-12-21) * Absätze [0001], [0006], [0007], [0031], [0050] - [0057], [0065], [0086] - [0095], [0103] - [0106], [0113], [0133] - [0138] * * Abbildungen 1-7 * ----- | 1-7 | INV. G05B23/02 |
| A | CN 117 592 580 A (GUANGDONG POWER GRID CO) 23. Februar 2024 (2024-02-23) * Absätze [0005] - [0016], [0040], [0085] - [0090] * ----- | 1-7 | |
| A | CN 112 784 718 B (UNIV SHANGHAI ELECTRIC POWER) 25. April 2023 (2023-04-25) * Absätze [0001], [0004] - [0010], [0019] - [0030]; Anspruch 1 * ----- | 1-7 | |
| A | CN 117 589 444 A (UNIV HUNAN SCIENCE & TECHNOLOGY) 23. Februar 2024 (2024-02-23) * Absätze [0001], [0005] - [0018] * ----- | 1-7 | RECHERCHIERTE SACHGEBIETE (IPC) G01M G06F G05B |

Der vorliegende Recherchenbericht wurde für alle Patentansprüche erstellt

| Recherchenort | Abschlußdatum der Recherche | Prüfer |
|---|---|---|
| München | 3. März 2025 | Hristov, Stefan |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 24 20 1312

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-03-2025

| Im Recherchenbericht angeführtes Patentdokument | Datum der Veröffentlichung | Mitglied(er) der Patentfamilie | Datum der Veröffentlichung |
|---|---|---|---|
| EP 4105900 A1 | 21-12-2022 | KEINE | |
| CN 117592580 A | 23-02-2024 | KEINE | |
| CN 112784718 B | 25-04-2023 | KEINE | |
| CN 117589444 A | 23-02-2024 | KEINE | |

Für nähere Einzelheiten zu diesem Anhang : siehe Amtsblatt des Europäischen Patentamts, Nr.12/82

EPO FORM P0461